# FASCICULE DE BREVET EUROPEEN

(11) **EP 0 358 538 B1**
(45) Date de publication et mention de la délivrance du brevet: **15.09.1993**
(21) Numéro de dépôt: 89401981.9
(22) Date de dépôt: 11.07.1989
(51) Int. Cl.: F16F 13/00

(54) **Support hydroélastique pilotable**
Regelbares hydroelastisches Lager
Adjustable hydroelastic mounting

(30) Priorité: 06.09.1988 FR 8811638
(43) Date de publication de la demande: 14.03.1990
(73) Titulaire: COMPAGNIE DES PRODUITS INDUSTRIELS DE L'OUEST (C.P.I.O.), 44023 Nantes Cédex (FR)
(72) Inventeur: Baudrit, Patrick, F-44120 Vertou (FR); Blais, Jean-Pierre, F-44300 Nantes (FR); Fort, Patrice, F-44470 Carquefou (FR)
(74) Mandataire: Foster, David Martyn

(56) Documents cités:
- EP-A- 0 077 195
- DE-A- 3 447 950
- FR-A- 2 563 880
- US-A- 4 756 513
- PATENT ABSTRACTS OF JAPAN, vol. 12, no. 73 (M-674) [2920], 8 mars 1988; & JP-A-62 215 141 (BRIDGESTONE CORP.) 21-09-1987
- PATENT ABSTRACTS OF JAPAN, vol. 8, no. 174 (M-316) [1611], 10 août 1984; & JP-A-59 65 635 (TOYOTA JIDOSHA K.K.) 13-04-1984

## Description

L'invention concerne un support hydroélastique pilotable, monté entre deux organes mécaniques soumis à des excitations dont la fréquence et l'amplitude varient, composé d'une voûte élastique adaptée pour être fixée sur l'un des organes mécaniques, d'un support adapté pour être fixé sur l'autre organe mécanique, d'une séparation divisant l'espace compris entre la voûte élastique et le support en une chambre de fluide supérieure et en une chambre de compensation limitée par une membrane, d'un canal hélicoïdal traversant ladite séparation et assurant la communication du fluide entre les deux chambres, et d'un piston central de compensation du déplacement du fluide de la chambre de fluide supérieure vers la chambre de compensation, ledit piston traversant ladite séparation et pouvant être immobilisé par un système de blocage.

Un tel support pilotable est connu d'après le document JP-A-62-215141. Dans ce support connu, le piston est immobilisé par un système de blocage qui s'engrène dans le piston. Ce système de blocage, qui entre en contact mécanique effectif avec le piston, peut souffrir une usure excessive et l'actionnement de sa commande peut aussi être très abrupt.

L'invention se propose de surmonter ces problèmes.

Selon l'invention, en conséquence, le support mentionné ci-avant est caractérisé en ce que le système de blocage comprend une gaine élastique annulaire portée par la séparation et entourant le piston, et en ce que le système de blocage comprend en outre des moyens pour contracter radialement ladite gaine autour du piston afin d'immobiliser celui-ci.

Une réalisation de l'invention va être décrite ci-dessous et se présente sous la forme d'un support élastique monté entre le moteur et le châssis d'une automobile.

Dans les différents états de sollicitations de la suspension moteur on distingue:
- Les mouvements de grande amplitude de balancement du moteur dûs aux variations brutales du couple moteur, et qui se situent dans la gamme comprise entre 0 et 10 Hz. Pour calmer ces mouvements, la suspension doit être raide et amortie.
- Les irrégularités de la route induisent des mouvements verticaux du moteur dans la gamme comprise entre 10 Hz et 20 Hz. Pour réduire les effets néfastes de ces mouvements la suspension doit être amortie.
- Lorsque le moteur est au ralenti, il transmet des vibrations à la caisse dans la gamme comprise entre 15 Hz et 25 Hz. Pour isoler la caisse de ces vibrations, la suspension doit être souple.
- Les masses en mouvement à l'intérieur du moteur génèrent des forces d'inertie qui mettent en vibration la caisse provoquant ainsi des bourdonnements dans la gamme comprise entre 30 Hz et 300 Hz. Pour remédier à cet inconvénient, la suspension doit être souple.

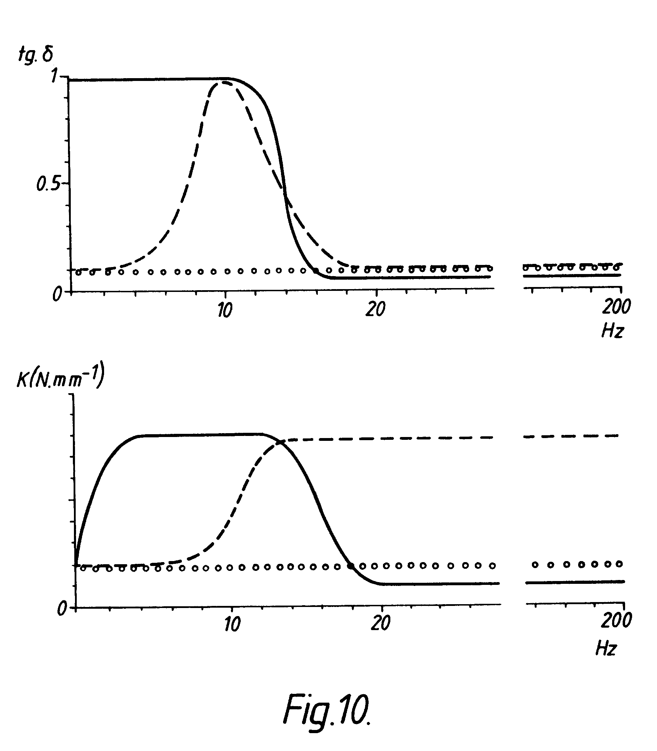

La résponse idéale du support est représentée par les courbes en traits pleins de la Figure 10 (l'une se rapporte au facteur de perte ou déphasage l'autre à la raideur du support).

On connaît des amortisseurs combinant un appui élastique en élastomère et un amortissement hydraulique obtenu par un étranglement entre deux chambres de liquide (voir FR-A-2 448 663.

On connaît également l'évolution de raideur et d'amortissement en fonction de la fréquence de tels amortisseurs. En basse fréquence, la raideur est proche de la raideur statique, puis passe à un plateau continu de raideur plus élevée lorsque l'on a dépassé le maximum de déphasage. Les courbes de réponse ont l'allure de celles en tirets de la Figure 10.

Sur cette figure sont représentés l'évolution de l'amortissement (caractérisée par le facteur de perte tgδ;δ = angle de perte), et celle de la raideur en fonction de la fréquence.

Le fonctionnement du support idéal est représenté par les courbes en traits pleins. Celui du support classique (qui correspond au cas du support suivant l'invention avec piston bloqué) est représenté par les courbes en tirets discontinus.

Les courbes en tirets montrent que la raideur d'un support hydroélastique classique présente deux paliers et que l'angle de perte a une évolution en forme de cloche. En effet, en fonctionnement, le fluide interne passe de la cavité supérieure à la cavité inférieure par l'intermédiaire d'un canal; les efforts d'inertie font que le débit de fluide dans le canal passe par un maximum (correspondant au maxi d'angle de perte) puis décroît jusqu'à l'annulation (mini de l'angle de perte, maxi de la raideur).

On peut voir que ce type de pièce donne un comportement satisfaisant pour un amortissement élevé (10 Hz à 20 Hz), mais s'écarte de la courbe idéale pour les variations brutales de couple moteur, le ralenti et l'acoustique (0 à 10 Hz).

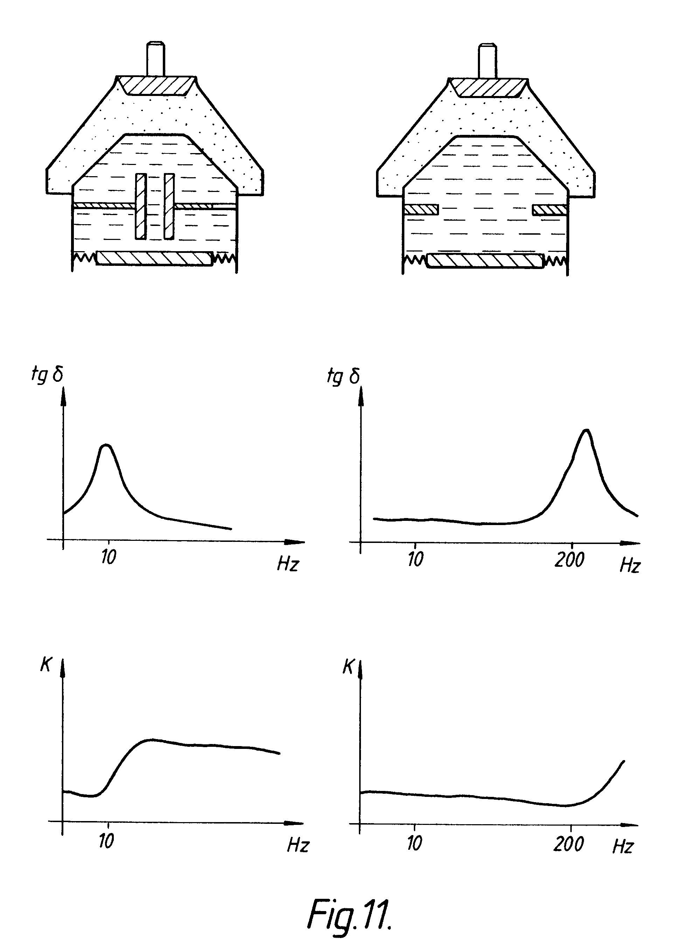

Dans la réalisation de l'invention que va être décrite de manière plus détaillée ci-dessous, un amortisseur de vibrations présente deuz états de fonctionnement (Figure 11) dans lequel on peut faire varier la situation dans le domaine fréquentiel du maximum d'amortissement, et donc le positionnement des paliers de raideur, de façon à avoir une raideur forte et un amortisseur élevé pour filtrer les irrégularités de la route (10 Hz à 20 Hz) et une raideur faible pour filtrer les vibrations du régime de ralenti moteur et les vibrations dans le domaine acoustique (0 à 10 Hz) (Figure 10).

Le cas des variations brutales de couple, qui dépend beaucoup de la configuration de la suspension, peut être traité soit par l'incorporation de limiteurs au support lui-même, soit par l'adjonction à la suspension de biellettes de limitation.

Dans l'amortisseur de vibrations qui va être décrit, la séparation entre les deux chambres le constituant est rendue mobile, et peut être immobilisée à volonté par l'intervention d'un électro-aimant, une action pneumatique ou tout autre moyen.

Un amortisseur de vibrations sous forme d'un support hydroélastique incorporant l'invention va maintenant être décrit, à titre d'exemple seulement, en se référant aux dessins ci-joints dans lesquels:
- La Figure 1 représente la coupe partielle du support en perspective avec son électro-aimant.
- La Figure 2 est la coupe longitudinale du support commandé par électro-aimant sous tension,
- A une coupe analogue correspond la Figure 3, où le support est sous charge verticale et l'électro-aimant non sollicité.
- La Figure 4 est la coupe transversale de l'ensemble permettant d'apprécier le blocage du piston central par l'électro-aimant.
- La Figure 5 représente un schéma en perspective du collier et de la tige de commande.
- La Figure 6 est la schématisation du travail du collier lorsque la commande est sollicitée ou non.
- La Figure 7 représente la coupe partielle d'un même support dont la commande est pneumatique.
- La Figure 8 est la coupe longitudinale du support à commande pneumatique lorsqu'il est sous pression,
- La Figure 9 est la représentation en coupe transversale d'une commande par fils en alliage à mémoire de forme,
- A la Figure 10 correspond la représentation de courbes des performances caractérisant le système,
- La Figure 11 donne représentation schématique des deux états de fonctionnement.

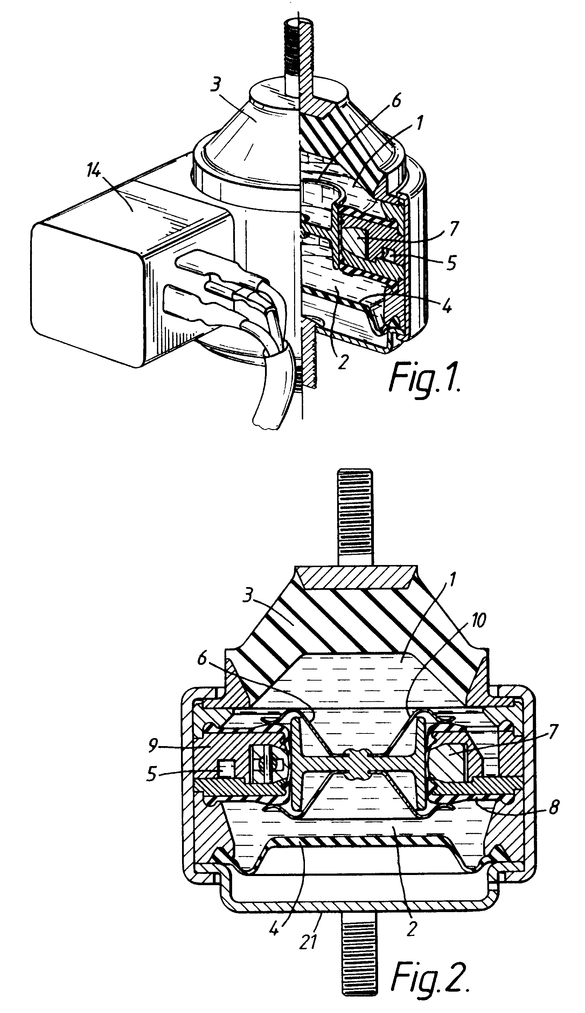

L'ensemble de l'élément (Figure 1) se compose principalement d'une voûte élastique 3, d'une chambre de fluide supérieure 1, d'une chambre de compensation 2 limitée par une membrane 4, d'un piston central 6 et d'un canal hélicoïdal 5 assurant la communication entre les deux chambres. L'électro-aimant 14 commande le changement d'état du support hydroélastique.

Dans le mode de réalisation de la Figure 2, l'enveloppe en élastomère agissant sur le fluide de la chambre supérieure 1 déplace celui-ci vers la chambre de compensation 2 ; lorsque le piston 6 est rendu immobile, le transfert de fluide s'effectue par le canal 5 dont la section et la longueur ont été réalisés de façon à obtenir un déphasage maximum pour une fréquence déterminée.

Lorsque le piston central 6 est libre, il compense les déplacements du fluide de la chambre 1 vers la chambre 2, en oscillant autour de sa position d'équilibre tout en étant limité dans ses grands mouvements par la raideur faible des lames de ressort 10 qui assurent le recentrage dudit élément. Dans ces conditions, on peut considérer que la plus grande partie du débit du fluide se fait par la partie centrale et non plus par le canal 5, permettant ainsi l'équilibrage des pressions entre les deux chambres.

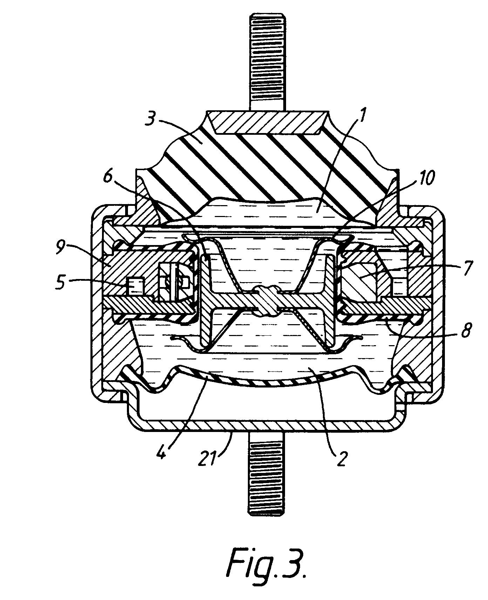

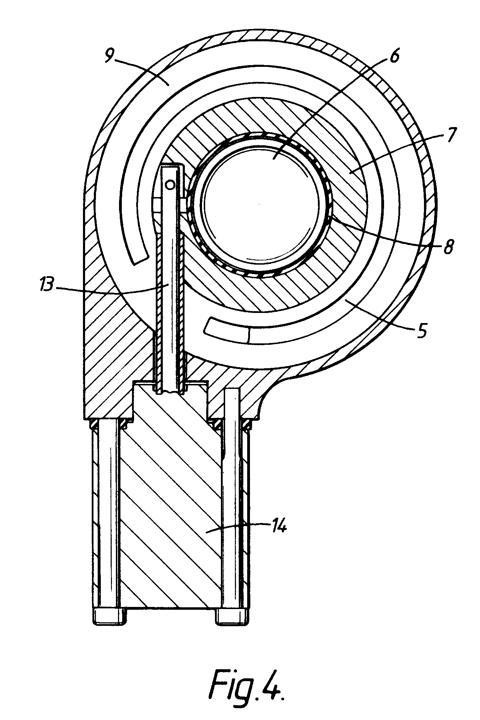

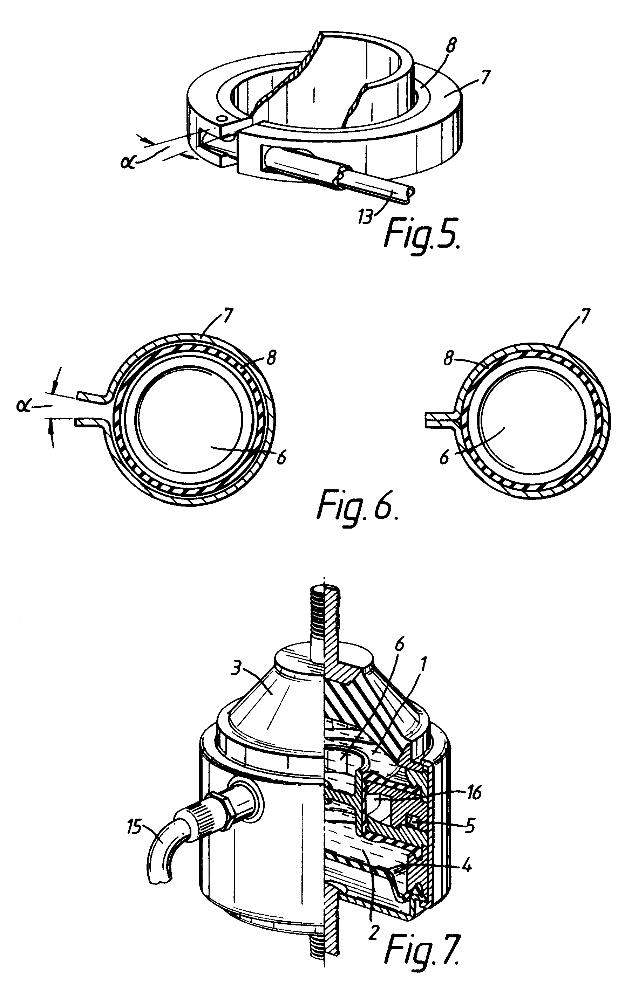

Au regard des Figures 2 et 3, on peut voir le rôle essentiel de l'état de liberté du piston central 6, la commande (Figure 4) est effectuée par l'électro-aimant 14 qui, lorsqu'il est sous tension par l'intermédiaire de sa tige entretoisée 13, vient resserrer le collier élastique 7 autour d'une gaine en élastomère 8 qui, sous l'effet de la commande, vient se contracter autour du piston 6, tout en assurant ainsi l'étanchéité de l'ensemble de la partie centrale. Les Figures 5 et 6 détaillent le mode d'action du collier qui commande le resserrement de l'élément 6.

La commande de blocage du piston central peut être d'une autre origine que mécanique. La Figure 7 nous montre un support à commande pneumatique, en perspective partiellement coupée, où l'on peut remarquer l'arrivée d'air 15 et la chambre 16 située dans le boîtier central.

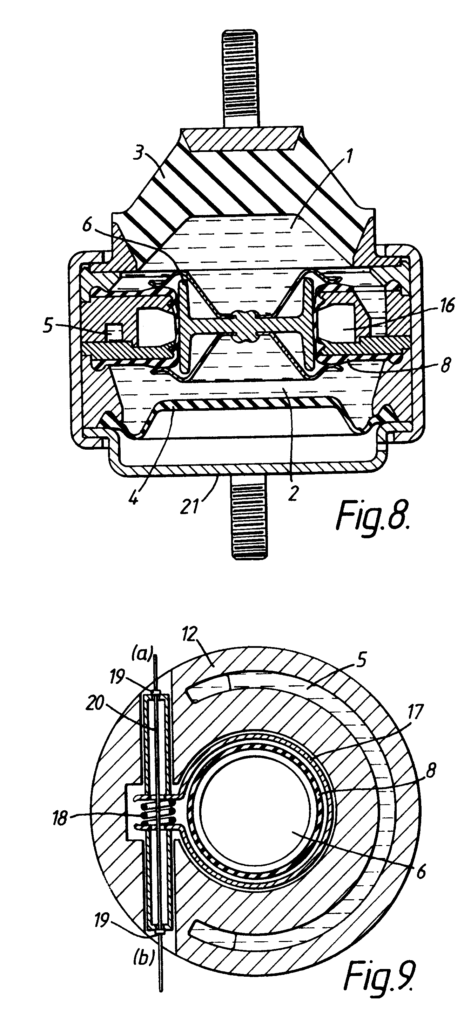

Dans la Figure 8, il est possible de voir la contraction de la gaine en élastomère 8 autour du piston par l'expansion de la chambre périphérique 16 sous l'effet de la pression d'air interne établie dans ladite chambre 16.

Dans le mode de réalisation de la Figure 9, la motorisation du système est assurée par un fil en alliage à mémoire de forme 20. En position libre et à température ambiante, le fil 20, sous l'effort du ressort de rappel 18, revient à sa position allongée qui permet au collier 17 de desserrer son étreinte autour du piston central 6.

Lors de l'échauffement du fil par effet Joule ou tout autre moyen, celui-ci atteint sa température de transformation qui le ramène à la forme qu'il a en mémoire (c'est-à-dire la forme contractée), donc les deux points d'accrochage en bout des entretoises 19 se rapprochent en comprimant le ressort, ils resserrent ainsi ainsi le collier autour de la gaine en élastomère, assurant à nouveau le blocage de ce dernier.

## Revendications

1. Support hydroélastique pilotable, monté entre deux organes mécaniques soumis à des excitations dont la fréquence et l'amplitude varient, composé d'une voûte élastique (3) adaptée pour être fixée sur l'un des organes mécaniques, d'un support (21) adapté pour être fixé sur l'autre organe mécanique, d'une séparation divisant l'espace compris entre la voûte élastique (3) et le support (21) en une chambre de fluide supérieure (1) et en une chambre de compensation (2) limitée par une membrane (4), d'un canal hélicoïdal (5) traversant ladite séparation et assurant la communication du fluide entre les deux chambres, et d'un piston central (6) de compensation du déplacement du fluide de la chambre de fluide supérieure (1) vers la chambre de compensation (2), ledit piston (6) traversant ladite séparation et pouvant être immobilisé par un système de blocage, caractérisé en ce que le système de blocage comprend une gaine élastique annulaire en élastomère (8) portée par la séparation et entourant le piston (6) et en ce que le système de blocage comprend en outre des moyens pour contracter radialement ladite gaine autour du piston afin d'immobiliser celui-ci.

2. Support suivant la revendication 1 caractérisé en ce que des lames de ressort de faible raideur (10) limitent le débattement du piston central (6) autour de sa position d'équilibre.

3. Support suivant la revendication 1 ou 2 caractérisé en ce que la contraction autour dudit piston de la gaine en élastomère (8) est assurée par l'intermédiaire d'un collier élastique (7) dont la déformation est provoquée par l'action d'un électro-aimant (14).

4. Support suivant la revendication 1 ou 2 caractérisé en ce que la contraction autour dudit piston de la gaine en élastomère (8) est assurée par l'effet d'une pression d'air interne établie dans une chambre (16) périphérique de commande entourant ladite gaine (8), l'expansion radiale de la chambre périphérique (16) provoquant le resserrement radial de la gaine (8).

5. Support suivant la revendication 1 ou 2 caractérisé en ce que la contraction autour dudit piston de la gaine en élastomère (8) est assurée par l'intermédiaire d'un collier élastique (7) dont la déformation est provoquée par l'action d'un fil à mémoire de forme (20).

## Claims

1. Controllable hydroelastic support mounted between two mechanical members subjected to excitations whose frequency and amplitude vary, composed of an elastic dome (3) suitable for being fixed to one of the mechanical members, of a support (21) suitable for being fixed to the other mechanical member, of a partition dividing the space lying between the elastic dome (3) and the support (21) into an upper fluid chamber (1) and into a compensation chamber (2) bounded by a membrane (4), of a helical passageway (5) passing through the said partition and providing the communication of the fluid between the two chambers, and of a central piston (6) for compensating for the displacement of the fluid from the upper fluid chamber (1) to the compensation chamber (2), the said piston (6) passing through the said partition and being able to be immobilised by a blocking system, characterised in that the blocking system comprises an annular elastic sheath, made from elastomer (8), carried by the partition and surrounding the piston (6) and in that the blocking system further comprises means for radially contracting the said sheath around the piston in order to immobilise the latter.

2. Support according to Claim 1, characterised in that spring leaves of low stiffness (10) limit the deflection of the central piston (6) about its equilibrium position.

3. Support according to Claim 1 or 2, characterised in that the contraction of the elastomer sheath (8) about the said piston is caused by means of an elastic collar (7) whose deformation is brought about by the action of an electromagnet (14).

4. Support according to Claim 1 or 2, characterised in that the contraction of the elastomer sheath (8) about the said piston is caused by the effect of an internal air pressure set up in a peripheral control chamber (16) surrounding the said sheath (8), the radial expansion of the peripheral chamber (16) bringing about the radial tightening of the sheath (8).

5. Support according to Claim 1 or 2, characterised in that the contraction of the elastomer sheath (8) about the said piston is caused by means of an elastic collar (7) whose deformation is brought about by the action of a shape-memory wire (20).

## Patentansprüche

1. Regelbares hydroelastisches Lager, montiert zwischen zwei mechanischen Organen, Erregungen ausgesetzt, deren Frequenz und Amplitude variieren, zusammengesetzt aus einer elastischen Kalotte (3), geeignet für die Befestigung an einem der mechanischen Organe, aus einem Träger (21), geeignet für die Befestigung an dem anderen mechanischen Organ, aus einer Abtrennung, die den Raum, der enthalten ist zwischen der elastischen Kalotte (3) und dem Träger (21) aufteilt in eine obere Fluidkammer (1) und eine durch eine Membran (4) abgegrenzte Kompensationskammer (2), aus einem spiralförmigen Kanal (5), der die genannte Abtrennung durchquert und die Verbindung des Fluids zwischen den beiden Kammern gewährleistet, und einen zentralen Kompensationkolben (6) für die Verdrängung des Fluids aus der oberen Fluidkammer (1) in die Kompensationskammer (2), wobei der genannte Kolben (6) die genannte Abtrennung durchdringt und durch ein Blockiersystem immobilisiert werden kann,
dadurch **gekennzeichnet,**
daß das Blockiersystem eine ringförmige elastische Hülle aus Elastomer (8) enthält, die gehalten wird durch die Abtrennung und die den Kolben (6) umgibt, und dadurch, daß das Blockiersystem außerdem Einrichtungen enthält, um die Hülle in radialer Richtung um den Kolben herum zu kontrahieren, um diesen zu immobilisieren.

2. Lager nach Anspruch 1, dadurch gekennzeichnet, daß Federlamellen von geringer Steife (10) die Ausfederung des zentralen Kolbens (6) um seine Gleichgewichtsposition herum begrenzen.

3. Lager nach einem der Ansprüche 1 oder 2, dadurch gekennzeichnet, daß die Kontraktion der Elastomerhülle (8) um den genannten Kolben herum gewährleistet wird durch einen elastischen Ring (7), dessen Verformung verursacht wird durch die Wirkung eines Elektromagneten (14).

4. Lager nach einem der Ansprüche 1 oder 2, dadurch gekennzeichnet, daß die Kontraktion der Elastomerhülle (8) um den genannten Kolben herum gewährleistet wird durch die Wirkung eines internen Luftdrucks, aufgebaut in einer peripheren Steuerkammer (16), welche die Hülle (8) umgibt, wobei die radiale Expansion der peripheren Kammer (16) das radiale Schrumpfen der Hülle (8) verursacht.

5. Lager nach einem der Ansprüche 1 oder 2, dadurch gekennzeichnet, daß die Kontraktion der Elastomerhülle (8) um den genannten Kolben herum gewährleistet wird durch einen elastischen Ring (7), dessen Verformung hervorgerufen wird durch die Wirkung eines Drahts aus Memory-Legierung (20).
